# EUROPÄISCHE PATENTSCHRIFT

(11) **EP 3 002 828 B1**
(45) Veröffentlichungstag und Bekanntmachung des Hinweises auf die Patenterteilung: **14.02.2018**
(21) Anmeldenummer: 14306558.9
(22) Anmeldetag: 03.10.2014
(51) Int. Cl.: H01R 4/70, H01R 4/18

(54) **Anordnung und Verfahren zum abdichten der Verbindungsstelle von elektrischen Leitungen**
Sealing assembly and method for sealing the junction between electrical conductors
Système et procédé d'étanchéité du point de jonction de lignes électriques

(43) Veröffentlichungstag der Anmeldung: 06.04.2016
(73) Patentinhaber: Nexans, 92400 Courbevoie (FR)
(72) Erfinder: Völkl, Dietmar, 95703 Plössberg (DE); Riedel, Richard, 92685 Floss (DE)
(74) Vertreter: Godard, Evelin

(56) Entgegenhaltungen:
- JP-A- H02 257 579

## Beschreibung

Die Erfindung bezieht sich auf eine Anordnung zum feuchtigkeitsdichten Abdecken der Verbindungsstelle von elektrischen Leitungen gemäß dem Oberbegriff des Patentanspruchs 1 sowie auf ein Verfahren zur Herstellung der Anordnung.

Eine derartige Anordnung geht beispielsweise aus der JP H02 257579 A hervor.

Eine solche Anordnung ist beispielsweise eine Verteileranordnung. In elektrischen Verteilern werden von einer Isolierung umgebene elektrische Leiter aus einer bestimmten ersten Anzahl von Mantelleitungen auf eine zweite Anzahl von Mantelleitungen aufgeteilt, welche von der ersten Anzahl verschieden ist. Die folgenden Ausführungen beziehen sich auf einen solchen elektrischen Verteiler, stellvertretend für alle anderen möglichen Anordnungen zum feuchtigkeitsdichten Abdecken der Verbindungsstelle von elektrischen Leitungen.

Beispielsweise können in elektrischen Verteilern elektrische Leiter einer mehradrigen Mantelleitung auf mehrere einadrige Mantelleitungen aufgeteilt werden. Solche elektrischen Verteiler finden beispielsweise in Industrie- oder Solaranlagen oder in Kraftfahrzeugen Anwendung. Insbesondere in Lastkraftwagen werden solche Verteiler beispielsweise dazu eingesetzt, elektrische Versorgungsströme sowie Daten- und Signalströme auf ABS-Systeme, Steuerventile, verschiedene Sensoren usw. in Lastanhängern aufzuteilen.

In einem elektrischen Verteiler sind die Leiterenden der zu verbindenden Adern leitfähig verbunden, und die Verbindungsstelle ist mediendicht abgedichtet. Es können auch passive elektrische Bauelemente in einem elektrischen Verteiler integriert sein, wie beispielsweise Dioden, Platinen und Widerstände. Die Leiter können beispielsweise mit Quetschverbindern oder Crimpverbindern verbunden werden. Es muß dabei sichergestellt werden, daß die einzelnen Verbindungsstellen zwischen den Leitern gegeneinander elektrisch isoliert sind.

Nach einem ersten bekannten Verfahren werden beispielsweise Quetschverbinder mit einer Kunststoffummantelung zum Verbinden der Leiterenden verwendet. Anschließend wird die so hergestellte Anordnung in zwei Spritzvorgängen mit Kunststoffmaterial umspritzt, um die Mediendichtigkeit des Verteilers zu erreichen. Ein zweiter Spritzvorgang ist notwendig, weil die Anordnung im Spritzwerkzeug an bestimmten Stellen gehalten werden muß und an diesen Stellen Oberflächenfehler, Löcher und optische Mängel verbleiben können.

Nach einem zweiten bekannten Verfahren werden die unisolierten, mit den Leiterenden verbundenen Verbinder in ein Einlegeteil aus Kunststoff gelegt und in diesem fixiert. Das Einlegeteil ist so gestaltet, daß die einzelnen Verbindungsstellen der Leiter voneinander isoliert sind. Anschließend wird das Einlegeteil mit den darin angeordneten Leiterverbindungsstellen in einem Spritzvorgang umspritzt, um einen mediendichten Verteiler herzustellen. Ein solches Verfahren ist allerdings nicht geeignet, elektrische Bauteile wie Dioden in den Verteiler zu integrieren, da die Einlegeteile nur für relativ kleine Anordnungen geeignet sind. Für größere Verteiler würden beim Spritzvorgang Probleme auftreten, da es bei großen Spritzvolumina zur Bildung von Masseanhäufungen, Einfallstellen und unerwünschten Hohlräumen, sogenannten Lunkern, kommen kann.

Aus der JP H02 257 579 A geht ein Verfahren hervor, mit dem zwei Komponenten von aufschäumendem Polyurethan in das Gehäuse einer Anordnung eingebracht werden können, in der elektrische Leiter miteinander verbunden sind. Ein damit hergestellter Schaumstoffkörper füllt das Gehäuse aus. Er wird durch das Gehäuse und durch Bänder begrenzt, die an beiden Enden des Gehäuses angebracht sind. Die Druckschrift beschreibt auch eine Verbindungsstelle zwischen elektrischen Leitern, in welcher ein Abzweigleiter mit einem Hauptleiter verbunden ist, und zwar mittels einer Schraubverbindung. Die Verbindungsstelle ist von dem aus Isoliermaterial bestehenden Gehäuse 8 umgeben, in welches die Leiter durch zwei Öffnungen hineingeführt sind, die durch die Bänder verschlossen sind, welche auch an den Isolierungen der beiden Leiter anliegen. In das Gehäuse werden die beiden Komponenten des Polyurethans eingefüllt, die innerhalb des Gehäuses reagieren und dasselbe mit dem Schaumstoffkörper ausfüllen.

Der Erfindung liegt die Aufgabe zugrunde, eine Anordnung zum feuchtigkeitsdichten Abdecken der Verbindungsstelle von elektrischen Leitungen anzugeben, welche robust, vibrationsfest und mediendicht sowie einfach herstellbar ist. Es soll weiterhin ein Verfahren angegeben werden, welches mit nur einem Spritzvorgang eine solche Anordnung bereitstellt.

Diese Aufgabe wird entsprechend den kennzeichnenden Merkmalen der Patentansprüche 1 und 5 gelöst.

Diese Anordnung wird dank des Gehäuses in nur einem Spritzvorgang mediendicht und mängelfrei umspritzt. Das durch Spritzgießen erzeugte Dichtmaterial umgibt die Leiter bzw. die Leitungen vollständig und füllt das Gehäuse ebenso vollständig aus. Dadurch ist die einwandfreie Abdichtung der Verbindungsstelle gegenüber sämtlichen Medien und insbesondere Wasser gewährleistet. Das vorgefertigte Gehäuse aus mechanisch stabilem Kunststoff ist für mehrere Verteilervarianten einsetzbar. Für verschiedenartige Anwendungen mit einer variablen Anzahl und Größe von zu verteilenden Leitungen kann dasselbe vorgefertigte Gehäuse verwendet werden, ohne daß das Gehäuse verändert oder angepaßt werden muß. Die Anpassung zwischen der Anzahl der Leitungen und der Größe der Öffnungen des Gehäuses erfolgt weitgehend über das Dichtmaterial, welches die Hohlräume zwischen den Leitungen und dem Gehäuse ausfüllt. Die so hergestellte Anordnung ist besonders robust und vibrationsfest, was insbesondere in Kraftfahrzeugen von Bedeutung ist. Durch die überwiegende Abdeckung des Dichtmaterials durch das Gehäuse beeinträchtigen optische Mängel des ausgehärteten Dichtmaterials nicht den qualitativen Eindruck der fertiggestellten Anordnung. Die Ränder der Öffnungen des Gehäuses weisen außerdem Dichtkonturen auf, welche von über die Ränder der Öffnungen überstehendem Dichtmaterial vollständig mediendicht abgedeckt werden. Durch die Dichtkonturen wird nach dem Aushärten des Dichtmaterials eine Verankerung zwischen demselben und dem Gehäuse erreicht, wodurch die Festigkeit und Dichtigkeit der Anordnung weiter verbessert ist.

Ausführungsbeispiele des Erfindungsgegenstandes sind in den Zeichnungen dargestellt:
Es zeigen:
   Fig. 1 schematisch ein Beispiel verbundener Adern eines elektrischen Verteilers nach einer Ausführungsform der erfindungsgemäßen Anordnung.
   Fig. 2 ein vorgefertigtes Gehäuse der Anordnung nach einer Ausführungsform in perspektivischer Ansicht.
   Fig. 3 die Anordnung nach einem erfindungsgemäßen Verfahrensschritt in Draufsicht.
   Fig. 4 die Anordnung nach einem weiteren erfindungsgemäßen Verfahrensschritt in perspektivischer Ansicht.

In den Zeichnungen beziehen sich gleiche Bezugszeichen auf gleiche technische Merkmale.

Die Erfindung wird im folgenden am Beispiel eines elektrischen Verteilers erläutert, wie er in einem Kraftfahrzeug eingesetzt werden kann. Der elektrische Verteiler wird wieder stellvertretend für alle anderen möglichen Anordnungen zum feuchtigkeitsdichten Abdecken der Verbindungsstelle von elektrischen Leitungen als Beispiel herangezogen.

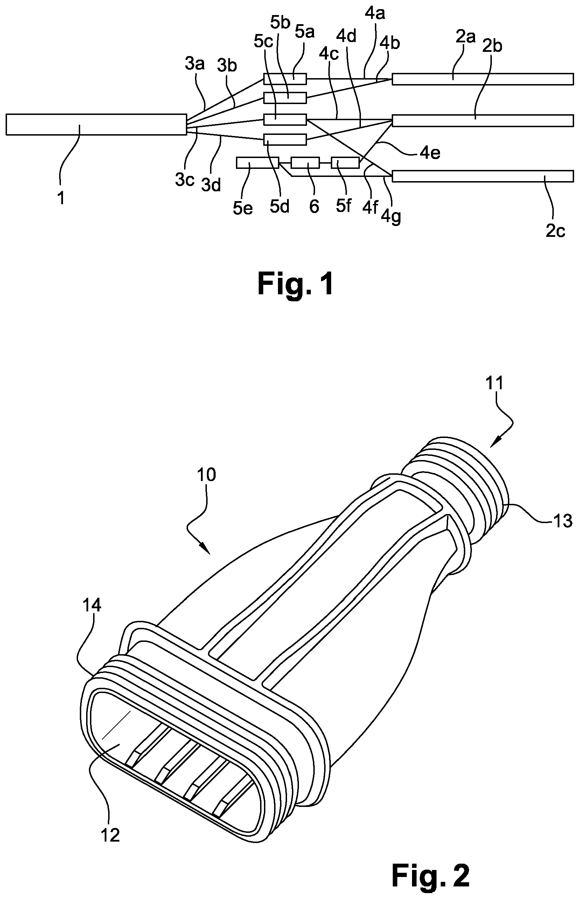

Fig. 1 zeigt schematisch ein Beispiel eines noch unabgedichteten elektrischen Verteilers. Die Adern 3a-3d einer ersten Leitung 1 sind auf die Adern 4a-4f dreier weiterer elektrischer Leitungen 2a-2c verteilt. In diesem Beispiel sind die Adern 3a, 3b der ersten Leitung 1 mit den Adern 4a, 4b einer zweiten Leitung 2a und die Adern 3c, 3d mit den Adern 4c, 4d einer dritten Leitung 2b verbunden. Eine vierte Leitung 2c dient zum Anschluß eines elektrischen Bauelements 6, beispielsweise eines passiven Bauelements, wie einer Diode oder eines Widerstands, mittels der Leiter 4e-4g.

Die Adern sind mit einer Isolierung versehene elektrische Leiter, welche beispielsweise aus Kupfer oder Aluminium oder einer Legierung bestehen können. Die zu verbindenden Leiterenden werden abisoliert und anschließend jeweils mit einem Verbinder 5a-5d verbunden, beispielsweise einem isolierten Quetschverbinder. Verbinder, die nicht mit anderen Leitern in Berührungskontakt kommen, können auch unisolierte Crimpverbinder sein. In dem gezeigten Beispiel wird das elektrische Bauelement 6 mittels zweier Verbinder 5e, 5f mit den Leitern 4e, 4g verbunden.

Fig. 2 zeigt eine Ausführungsform eines Gehäuses 10 für einen elektrischen Verteiler. Das Gehäuse 10 besteht aus mechanisch stabilem Kunststoff. Dieses Isoliermaterial ist beispielsweise Polyamid, thermoplastisches Polyurethan oder Polyethylenterephthalat. Das Gehäuse 10 hat zwei Öffnungen 11 und 12 zur Durchführung der ersten Leitung 1 einerseits und der weiteren Leitungen 2a-2c andererseits. Das Gehäuse 10 dient zur Abdeckung der Verbindungsstelle zwischen den Leitungen und damit aller Verbindungsstellen zwischen den einzelnen elektrischen Leitern des Verteilers.

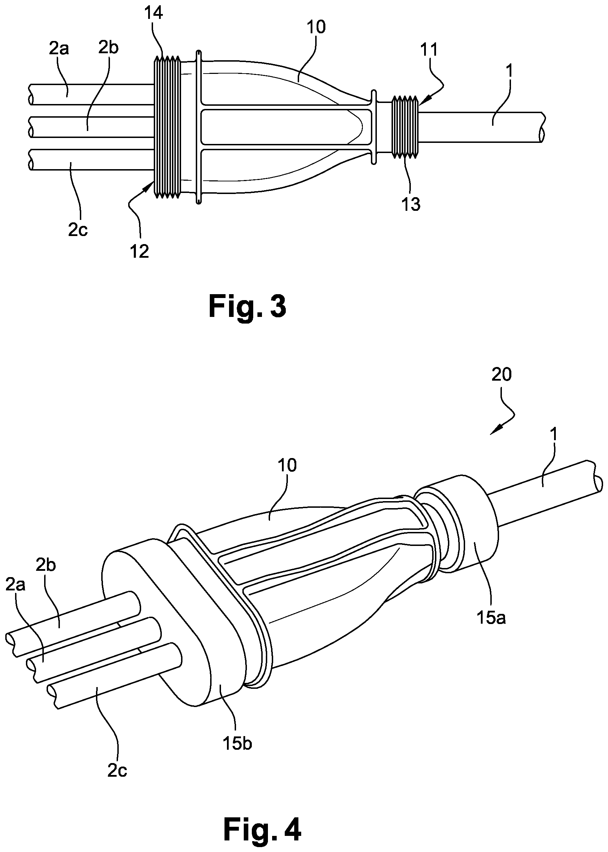

Zur Herstellung des elektrischen Verteilers wird das Gehäuse 10 beispielsweise über die erste Leitung 1 geschoben, bevor die Leiterenden miteinander verbunden werden. Anschließend werden, wie beispielsweise in Fig. 1 dargestellt, die Leiterenden aller Leitungen 1 und 2a-2c miteinander verbunden, und das Gehäuse 10 wird über die Verbindungsstelle geschoben. Das Ergebnis des letzten Schritts ist in Fig. 3 gezeigt.

In Fig. 4 ist eine Ausführungsform eines fertigen Verteilers 20 dargestellt. Nachdem das Gehäuse 10 über die Gesamtheit der Verbindungsstellen geschoben wurde, wird das Gehäuse 10 mit den durchgehenden Leitern in ein Spritzgießwerkzeug eingebracht. Das Gehäuse 10 wird vollständig mit Dichtmaterial ausgespritzt. Dadurch werden die Verbindungsstellen zwischen den einzelnen Leitern rundum von Dichtmaterial umgeben und so mediendicht abgedichtet. Das ausgehärtete Dichtmaterial reicht etwas über das Gehäuse 10 hinaus und bildet an den Rändern der Gehäuseöffnungen 11 und 12 Abdichtelemente 15a und 15b, welche den Durchgang der Leitungen 1 und 2a-2c durch die Öffnungen 11 und 12 vollständig abdichten. Die Ränder der Öffnungen 11 und 12 des Gehäuses 10 werden in dem Spritzvorgang zusätzlich mit umspritzt. Die endgültige äußere Form des Dichtmaterials wird bestimmt durch die Form des verwendeten Spritzgießwerkzeugs.

Um die Verbindungsfestigkeit zwischen dem Spritzmaterial und dem Gehäuse 10, und insbesondere an dessen Öffnungen 11 und 12, zu erhöhen, weisen die Öffnungen 11 und 12 an deren Rändern Dichtkonturen 13 und 14 auf. Diese Dichtkonturen 13 und 14 können beispielsweise lamellenförmig sein, wie in den Fig. 2 und 4 dargestellt. Durch die Dichtkonturen 13 und 14 ist sichergestellt, daß sich das Dichtmaterial während des Spritzgießens innerhalb der Dichtkonturen 13 und 14 ausbreitet und nach dem Erkalten fest in diesen verankert ist. Die Mediendichtigkeit des Verteilers 20 sowie seine Festigkeit werden dadurch weiter erhöht. Die Dichtkonturen 13 und 14, welche eine Strukturierung der Ränderoberflächen darstellen, können auch andere geeignete Formen annehmen.

Das vorgefertigte Gehäuse 10 ist so gestaltet, daß die Größe der Öffnungen 11 und 12 jeweils der Anzahl der durchgeführten Leitungen angepaßt ist. Die Anpassung erfolgt durch das Ausspritzen mit dem Dichtmaterial. Auf diese Weise ist es möglich, das gleiche vorgefertigte Gehäuse für eine Vielzahl von möglichen Kombinationen von Leitungsanzahlen zu verwenden. Es ist deshalb möglich, dasselbe Gehäuse für verschiedenartige Verteiler einzusetzen.

## Patentansprüche

1. Anordnung (20) zum feuchtigkeitsdichten Abdecken der Verbindungsstelle von elektrische Leiter aufweisenden elektrischen Leitungen (1,2a-2c), bei welcher die elektrischen Leiter (3a-3d) von mindestens einer ersten elektrischen Leitung (1) mit den elektrischen Leitern (4a-4f) von mindestens zwei weiteren elektrischen Leitungen (2a-2c) verbunden sind, bei welcher die Verbindungsstelle von einem vorgefertigten Gehäuse (10) aus einem mechanisch stabilen Kunststoff umgeben ist, das Öffnungen (11,12) zur Durchführung der mindestens einen ersten und zwei weiteren elektrischen Leitungen (1,2a,2c) aufweist, und bei welcher der Innenraum des Gehäuses (10) vollständig von einem Dichtmaterial ausgefüllt ist, das sich auf beiden Seiten des Gehäuses (10) bis über die in dasselbe hineinragenden Leitungen (1,2a-2c) erstreckt, **dadurch gekennzeichnet,**
- **daß** das durch Spritzgießen erzeugte Dichtmaterial an den Öffnungen (11,12) des Gehäuses (10) jeweils über das Gehäuse (10) derart hinaussteht, daß die Ränder der Öffnungen (11,12) des Gehäuses (10) von dem überstehenden Dichtmaterial vollständig mediendicht abgedeckt sind, und
- **daß** die Ränder der Öffnungen (11,12) des Gehäuses (10) an ihren äußeren Oberflächen eine Strukturierung darstellende Dichtkonturen (13,14) aufweisen, welche von dem überstehenden Dichtmaterial vollständig mediendicht abgedeckt sind.

2. Anordnung nach Anspruch 1, **dadurch gekennzeichnet, daß** die Dichtkonturen (13,14) lamellenförmig ausgeführt sind.

3. Anordnung (20) nach Anspruch 1, **dadurch gekennzeichnet, daß** die elektrischen Leiter (3a-3d) der mindestens einen ersten elektrischen Leitung (1) mittels Quetschverbindern (5a-5d) mit den elektrischen Leitern (4a-4f) der mindestens zwei weiteren elektrischen Leitungen (2a-2c) verbunden sind.

4. Anordnung (20) nach Anspruch 1, **dadurch gekennzeichnet, daß** das vorgefertigte Gehäuse (10) aus Polyamid, aus thermoplastischem Polyurethan oder aus Polyethylenterephthalat besteht.

5. Verfahren zur Herstellung einer Anordnung (20) zum feuchtigkeitsdichten Abdecken der Verbindungsstelle von elektrische Leiter aufweisenden elektrischen Leitungen (1,2a-2c), mit welchem die elektrischen Leiter (3a-3d) von mindestens einer ersten elektrischen Leitung (1) mit den elektrischen Leitern (4a-4f) von mindestens zwei weiteren elektrischen Leitungen (2a-2c) verbunden werden, mit welchem die Verbindungsstelle der Leiter von einem vorgefertigten Gehäuse (10) aus einem mechanisch stabilen Kunststoff abgedeckt wird und mit welchem der Innenraum des Gehäuses (10) vollständig mit Dichtmaterial ausgefüllt wird, das sich auf beiden Seiten des Gehäuses (10) bis über die in dasselbe hineinragenden Leitungen (1,2a-2c) erstreckt, **dadurch gekennzeichnet,**
**daß** das durch Spritzgießen erzeugte Dichtmaterial an den Öffnungen (11,12) des Gehäuses (10) jeweils über das Gehäuse (10) derart hinaussteht, daß die Ränder der Öffnungen (11,12) des Gehäuses (10) von dem überstehenden Dichtmaterial vollständig mediendicht abgedeckt sind, und
**daß** die Ränder der Öffnungen (11,12) des Gehäuses (10) an ihren äußeren Oberflächen eine Strukturierung darstellende Dichtkonturen (13,14) aufweisen, welche von dem überstehenden Dichtmaterial vollständig mediendicht abgedeckt sind.

6. Verfahren nach Anspruch 5, **dadurch gekennzeichnet, daß** die elektrischen Leiter (3a-3d) der mindestens einen ersten elektrischen Leitung (1) mittels Quetschverbindern (5a-5d) mit den elektrischen Leitern (4a-4f) der mindestens zwei weiteren elektrischen Leitungen (2a-2c) verbunden werden.

## Claims

1. Arrangement (20) for moisture-tight covering of the connection point of electrical conductors comprising electrical lines (1, 2a-2c), wherein the electrical conductors (3a-3d) of at least a first electrical line (1) are connected with the electrical conductors (4a-4f) by at least two further electrical lines (2a-2c), wherein the connection point is surrounded by a prefabricated housing (10) of a mechanically-stable plastic, and which comprises the openings (11, 12) for the passage of the at least one first and two further electrical lines (1, 2a, 2c), and wherein the interior of the housing (10) is completely filled with a sealing material extending on both sides of the housing (10) as far as the lines (1, 2a-2c) protruding into it,
**characterized in that**
- the sealing material produced by injection molding at the openings (11,12) of the housing (10) respectively protrudes over the housing (10) so that the edges of the openings (11,12) of the housing (10) are covered completely media-tight by the protruding sealing material, and
- that the edges of the openings (11, 12) of the housing (10) on their outer surfaces comprise sealing contours (13, 14) forming a structure and which are covered completely media-tight by the protruding sealing material.

2. Arrangement according to claim 1,
**characterized in that**
the sealing contours (13, 14) are designed in a lamellar manner.

3. Arrangement (20) according to claim 1,
**characterized in that**
the electrical conductors (3a-3d) of the at least one first electrical line (1) are connected with the electrical conductors (4a-4f) of the at least two further electrical lines (2a-2c) by means of crimp connectors (5a-5d).

4. Arrangement (20) according to claim 1,
**characterized in that**
the prefabricated housing (10) consists of polyamide, thermoplastic polyurethane, or polyethylene terephthalate.

5. Method for producing an arrangement (20) for moisture-tight covering of the connection point of electrical conductors having electrical lines (1, 2a-2c), with which the electrical conductors (3a, 3d) of at least one first electrical line (1) are connected with the electrical conductors (4a-4f) of at least two further electrical lines (2a-2c), wherein the connection point of the conductors of a prefabricated housing (10) is covered by a mechanically-stable plastic, and wherein the interior of the housing (10) is completely filled with sealing material, which extends on both sides of the housing (10) as far as the lines (1, 2a-2c) protruding into it,
**characterized in that**
- the sealing material produced by injection molding at the openings (11, 12) of the housing (10) protrudes over the housing (10) so that the edges of the openings (11, 12) of the housing (10) are completely covered media-tight by the protruding sealing material, and
- the edges of the openings (11, 12) of the housing (10) comprise, on their outer surfaces, structure-forming sealing contours (13, 14) which are covered completely media-tight by the protruding sealing material

6. Method according to claim 5,
**characterized in that**
the electrical conductors (3a-3d) of the at least one first electrical line (1) are connected with the electrical conductors (4a-4f) of the at least two further electrical lines (2a-2c) by means of crimp connectors (5a-5d).

## Revendications

1. Système (20) destiné à recouvrir de façon étanche à l'humidité le point de jonction de lignes électriques (1, 2a-2c) présentant des conducteurs électriques, dans lequel les conducteurs électriques (3a-3d) d'au moins une première ligne électrique (1) sont raccordés aux conducteurs électriques (4a-4f) d'au moins deux autres lignes électriques (2a-2c), dans lequel le point de jonction est entouré d'un boîtier (10) préfabriqué en matière plastique mécaniquement stable qui présente des ouvertures (11, 12) destinées au passage de la première ligne électrique au moins au nombre de un et des autres lignes électriques (1, 2a-2c) au moins au nombre de deux, et dans lequel l'espace intérieur du boîtier (10) est entièrement rempli d'un matériau d'étanchéité qui s'étend sur les deux côtés du boîtier (10) jusqu'au-dessus des lignes (1, 2a-2c) faisant saillie dans le boîtier, **caractérisé en ce que**
- le matériau d'étanchéité produit par moulage par injection dépasse respectivement au-dessus du boîtier (10) sur les ouvertures (11, 12) du boîtier (10) de telle sorte que les bords des ouvertures (11, 12) du boîtier (10) sont entièrement recouverts de façon étanche aux fluides par le matériau d'étanchéité qui déborde, et
- les bords des ouvertures (11, 12) du boîtier (10) présentent sur leurs surfaces extérieures des contours d'étanchéité (13, 14), représentant une structuration, qui sont entièrement recouverts de façon étanche aux fluides par le matériau d'étanchéité qui déborde.

2. Système selon la revendication 1, **caractérisé en ce que** les contours d'étanchéité (13, 14) sont réalisés en forme de lamelles.

3. Système (20) selon la revendication 1, **caractérisé en ce que** les conducteurs électriques (3a-3d) de la première ligne électrique (1) au moins au nombre de un sont raccordés au moyen de connecteurs à sertir (5a-5d) aux conducteurs électriques (4a-4f) des autres lignes électriques (2a-2c) au moins au nombre de deux.

4. Système (20) selon la revendication 1, **caractérisé en ce que** le boîtier (10) préfabriqué se compose de polyamide, de polyuréthane thermoplastique ou de polyéthylène téréphtalate.

5. Procédé de fabrication d'un système (20) destiné à recouvrir de façon étanche à l'humidité le point de jonction de lignes électriques (1, 2a-2c) présentant des conducteurs électriques, avec lequel les conducteurs électriques (3a-3d) d'au moins une première ligne électrique (1) sont raccordés aux conducteurs électriques (4a-4f) d'au moins deux autres lignes électriques (2a-2c), avec lequel le point de jonction des conducteurs est recouvert d'un boîtier (10) préfabriqué en matière plastique mécaniquement stable et avec lequel l'espace intérieur du boîtier (10) est entièrement rempli d'un matériau d'étanchéité qui s'étend sur les deux côtés du boîtier (10) jusqu'au-dessus des lignes (1, 2a-2c) faisant saillie dans le boîtier, **caractérisé en ce que** le matériau d'étanchéité produit par moulage par injection dépasse respectivement du boîtier (10) sur les ouvertures (11, 12) du boîtier (10) de telle sorte que les bords des ouvertures (11, 12) du boîtier (10) sont entièrement recouverts de façon étanche aux fluides par le matériau d'étanchéité qui déborde, et
les bords des ouvertures (11, 12) du boîtier (10) présentent sur leurs surfaces extérieures des contours d'étanchéité (13, 14), représentant une structuration, qui sont entièrement recouverts de façon étanche aux fluides par le matériau d'étanchéité qui déborde.

6. Procédé selon la revendication 5, **caractérisé en ce que** les conducteurs électriques (3a-3d) de la première ligne électrique (1) au moins au nombre de un sont raccordés au moyen de connecteurs à sertir (5a-5d) aux conducteurs électriques (4a-4f) des autres lignes électriques (2a-2c) au moins au nombre de deux.
